Europäisches Patentamt

European Patent Office

Office européen des brevets

(11) Publication number: **0 246 704 B1**

# EUROPEAN PATENT SPECIFICATION

(45) Date of publication of patent specification: **19.02.92**  (51) Int. Cl.⁵: **A22C 13/00**, A22C 13/02

(21) Application number: **87200916.2**

(22) Date of filing: **18.05.87**

(54) **Process for shaping shrinkable synthetic intestines.**

(30) Priority: **23.05.86 NL 8601320**

(43) Date of publication of application:
**25.11.87 Bulletin 87/48**

(45) Publication of the grant of the patent:
**19.02.92 Bulletin 92/08**

(84) Designated Contracting States:
**AT BE CH DE ES FR GB GR IT LI LU NL SE**

(56) References cited:
EP-A- 0 180 666       DE-A- 2 064 280
DE-A- 2 132 279       DE-A- 2 505 207
FR-A- 1 243 052       FR-A- 2 120 099
NL-A- 7 410 596

(73) Proprietor: **Krehalon Industrie B.V.**
**Londenstraat 10**
**NL-7418 EE Deventer(NL)**

(72) Inventor: **Coenradie, Ernst Willie**
**Nijhoffgaarde 105**
**NL-7414 WL Deventer(NL)**

(74) Representative: **Kooy, Leendert Willem et al**
**OCTROOIBUREAU VRIESENDORP & GAADE**
**P.O. Box 266**
**NL-2501 AW The Hague(NL)**

# Description

The invention relates to a process for the manufacture of a piece of intestine of shrinkable plastic film suited to be filled with foodstuffs, in which the plastic film, having a tubular shape, is lead onto a mandrel at a certain running-in speed, while being kept at an internal pressure (higher than the ambient pressure) by means of air supplied, so that it assumes a cylindrical shape, and is shirred onto said mandrel, in which, during shirring, the plastic tube is more or less pleated with the aid of the shirring wheels and in which, the shirred part of the plastic tube is subjected to a heat treatment (at a heating station) wherein its exterior surface is locally heated to a temperature at which the plastic material starts to shrink, which temperature is below the melting temperature of the plastic material.

Such a process is known from European patent application 180666. According to the process described therein a casing tube of plastic material is continuously pulled over a mandrel from a feeding means to a storage means, while being passed along shirring wheels and subsequently heating means.

Intestines of plastic film are often used as casings for foodstuffs, and particularly for sausages. Prior to stuffing the intestines, a tube of plastic film is shirred onto a mandrel, in which process the tube can be slid together in such a manner that pieces of intestines of great actual lengths, e.g. 20 - 80 meters can be obtained. An advantage of these so-called caterpillars of such a great actual length is that after applying a caterpillar to a stuffing horn, large series of sausages can be continuously produced. Intestines from pieces of intestine produced in the above-stated manner have a great uniformity. In those cases where one wishes to have final products with a natural and craft-like appearance, which is characterized by striking irregularities, that could be a drawback.

It is known art to locally shrink shrinkable intestines on a plastic basis, such as PVDC, PET, PA, by means a heat treatment, which, after stuffing, gives them an irregular appearance that has some resemblance to some natural intestines. It has appeared, however, that from these sausages the shape variations remains virtually restricted to the shapes of the end part intestine (the so-called Fettend), wherein the extent of deviation with respect to a cylindrical shape can be regarded as slight. It also occurs that these sausages entirely loose their irregular shape as a result of sterilization (e.g. at 110°) and partly loose their irregular shape as a result of cooking.

One way of manufacturing tubular casings which have the appearance of natural intestines is constituted by the process according to European patent application 180666.

The plastic film of which a tube is made has virtually always been stretched first. During this stretching, an orientation of the molecules is established, to an extent which is higly dependent on the temperature at which the film is kept during stretching. The obtained orientation can then be fixed by cooling. As a consequence of heating the piece of intestine in a later stage of the process, the mobility of the molecules is highly increased again: the molecules will strive to regain their former shape, which manifests itself in released shrinking stress (Pa) and, if the material is given the chance to shrink freely, in shrink (%). Shrink can only occur when the shrinking stresses generated by heating are higher then the already present other stresses which act oppositely. Since shrinking stresses are fairly small (in the range of 1 to 2 MPa for PVDC), shrinking stresses will in practice be often overruled by other stresses such as stresses due to material transport, internal air pressure etc. In order to have the shrinking stresses generated by heating be as effective as possible, it is thus desirable to have the piece of intestine as free of stresses as possible. During cooking or sterilization in the production process of the stuffed intestine the intestine will tend to its ideal, cylindrical shape as a result of the pressure which is exerted on the intestine by the foodstuffs and the increased temperature. The extent to which this loss of shape occurs is dependent on the thickness of the material at the shrinking areas (the thicker the film there, the slighter the loss of form) and on the difference between the temperature during shrinking of the piece of intestine, hereafter to be called shrinking temperature, and the temperature during the further production process of e.g. sausages, hereafter to be called the process temperature (the greater the differemce, the sligther the loss of shape). Experimentally, it has appeared that an intestine with a local increase in thickness of 100% shows a slight loss of shape during cooking (75-85°C) and a total loss of shape after sterilization (110-121°C), but a local increase in thickness of 250% shows no loss of shape whatsoever during cooking and only a slight loss of shape after sterilization. In general it can be said that the thickness increase shows an upward tendency when shrinking temperatures are increased and with it the fixed shape of the intestine. In order to reduce as far as possible the loss of shape of the intestine as a result of exposing it to the process temperature, the shrinking temperature should be maintained way above the sterilization temperature but still below the melting temperature of the plastic material. Thus for pieces of intestine of PVDC, the melting point of which is only a few tens of degrees C above the melting sterilization temperature, the shrinking temperature will have to be chosen just below the melting point, whereas with intestines of PET and PA, as a consequence of their higher melting points, there is more latitude when choosing the shrinking temperature. Irregular shrinking of the plastic film of the piece of intestine can be promoted by having the duration and the intensity of the contact of the parts of the piece of intestine with the heat carrier be irregularly divided over the surface of the piece of intestine.

In order to attain the above-described object, the invention, in accordance with the above-discussed views, provides a process according to which, after a certain length of tube has been shirred onto the mandrel, the plastic tube is cut off downstream of the shirring wheels and at or upstream of the heating station so that the thus obtained separated piece of intestine is maintained in a condition in which it is free of stresses, other than those which are the result of gravitional forces or it being shirred, in which condition the piece of intestine is subjected to the heat treatment.

The pieces of intestine obtained with the process of the invention are irregularly shaped and will keep their irregular shape to a sufficient, recognizable extent.

Another aim of the invention is to already provide the piece of intestine with an irregular appearance before it is heated, which appearance promotes the forming of irregularities during heating and their durability. The desired rate of irregularity can be defined so that not one single sausage or the like of about 20 - 40 cm may recognizably display the same pattern as another sausage originating from that same piece of intestine.

When performing the customary shirring, it is attempted to shirr a maximum length of plastic tube per piece of intestine in the processing direction onto the mandrel, which either has or has not a mandrel speed (e.g. 3 m/min at a running-in speed of 200 m/min). In doing so, one usually aims at an appearance of the piece of intestine which is as regular as possible. Therefore it is important to prevent that too much air is enclosed, since that restricts the amount of material that can be shirred onto the mandrel and gives the piece of intestine a sloppy appearance. Furthermore, the diameter of the mandrel should not be much smaller than the diameter of the plastic tube, in view of the stuffing process later on and so as to prevent sloppy shirring and it should not be too big in view of the space required for shirring. However, by setting the ratio between the running-in speed and the mandrel speed far lower then usual, there will be shirred a proportional length less of the plastic tube onto the same, useful length of mandrel. Then the plastic tube is looser onto the mandrel, with as a result that the angles of the pleats of the tube will be less sharp locally. If this is combined with an opted internal pressure, at which the tube is kept during running-in and shirring, that is far higher than usual (0.02 MPa over-pressure), then the material can be locally prevented from pleating. As a result, interruptions occur in the rectiliniarly pleated material, from which, as a result of the high internal pressure, balloon-shaped bulges spring in which no pleating stresses are present. The thus obtained irregular appearance of the shirred tube can be enhanced by providing the tube also with a larger clearance in radial direction, which can be attained by reducing the ratio mandrel diameter-tube diameter, which is normally 60 to 70%.

The views discussed in the preceding paragraphs have lead to a process according to the invention, with which the last-described object can be attained, according to which the internal pressure at which the plastic tube is maintained is chosen so much higher than the prevailing pressure on the tube and the ratio between the running-speed of the tube and the mandrel speed is chosen so that the ratio between the lengths of the tube forming the piece of intestine and the piece of intestine itself is such, that the shirred plastic tube acquires unpleated bulges which are divided over its exterior at random. The internal pressure therein is maintained 0,05-0,25 MPa higher than the prevailing pressure and the running-in speed and the mandrel speed are chosen so that the ratio of lengths will amount to less than 30:1, preferably to 20:1 If the plastic material is PVDC the internal pressure is preferably maintained 0.05-0.20 MPa, even preferably 0.10 MPa higher than the prevailing pressure. If the plastic material is PET or PA the internal pressure is preferably maintained 0.07-0.25 MPa higher than the prevailing pressure. According to a preferred embodiment of the invention, the diameter of the mandrel is herewith also chosen at 50 to 60% of the diameter of the plastic tube that the irregularities at the external surface of the shirred plastic tube perceptibly increase in number and/or size.

It is customary to let the internal overpressure be nil for a short period after the desired length of plastic tube has been shirred and then to maintain the tube at een internal over-pressure, being higher this time (e.g. 0.05 Mpa), when the tube is cut to get a piece of intestine. This extra pressure impulse serves to push the film tightly against an adhesive tape, so that the non-shirred tube is kept open for receiving the next mandrel, for the cut piece of intestine remains, during heat-treatment, on the mandrel onto which it was shirred. It has appeared that the effect of the invention can be increased by considerably increasing the extra pressure impulse.

In accordance with this experience, in a further preferred embodiment of the invention, after termination of the shirring and after a short period in which it is no longer maintained at an over-pressure from the inside, the tube is again maintained at an internal pressure that is 0.10 - 0.20 Mpa higher than the prevailing pressure when the tube is cut. Preferably the extra internal pressure is maintained 0.15 higher than the prevailing pressure.

An irregular appearance of the piece of intestine can also be obtained in another way. If, at otherwise ordinary circumstances, only the running-in speed is chosen so low that it results in said length ratio being far smaller (e.g. 30 - 50%) than the usual ratio and if this piece of intestine is irrigated with a liquid so as to heat it, it appears that only the outside, formed by outwardly directed pleats, is shrunk. As a consequence of the heating the original folding lines experience an increase in their thickness of about 100%, which results in a rhomboid net pattern on the intestines derived from the piece of intestine. On account of the fact that outwardly directed pleats are not divided regularly and on account of irregular heat transfer a slight deviation from a straight shape occurs in the synthetic intestines derived from the piece of intestine. However, this type of decoration is not form-retaining at sterilization temperatures, but it is at temperatures involved in the ordinary cooking process (75 - 85°C).

After a desired length of tube is shirred, the tube is cut in the transition area between the shirred and the non-shirred portion. The shirred portion of the tube, the piece of intestine, is now practically free of stress and is ready for the immediately following heat treatment. The method of heating to be chosen depends on the material of the plastic film and on the allowable difference between the temperature at which shrinking is performed and the melting temperature of the material. It has appeared that irrigation with a hot liquid (e.g. paraffin oil) being at a temperature of e.g. 140 - 145°C, is suitable to obtain the desired irregular shrinking effect, without the material starting to melt anywhere. If the piece of intestine is irrigated from above by means of a curtain of liquid or a series of jets , the liquid not only contacts the pleats or bulges located on the outside of the piece of intestine, but also a portion of the remaining outer surface of the piece of intestine, as a result of which the desired greater extent of irregularity is obtained. By splitting the curtain of liquid in such a manner that the bulges which are located in the centre on top of the piece of intestine do not contact the liquid this effect can even be intensified. By means of such heat treatments, increases in thickness up to about 350% can be established.

The pieces of intestine could also be heated by means of air. However, air acts less penetratingly since it is more volatile than liquid so that shrinking remains almost completely limited to the pleats and/or bulges on the exterior of the piece of intestine. Moreover, air has a lower specific heat and it transfers heat less efficiently, so that, in order to transfer a sufficient amount of heat to the material in an identical treatment-period, it should be maintained at a higher temperature (± 10 - 15°C) than the oil. However, it has appeared that the more compactly pleated material under the bulges is more sensitive to temperature than the material at the bulges. At PVDC pieces of intestine, at which heating with oil usually is performed at a temperature close to the melting point, the temperatures should, in case of heating by air, therefore be maintained at a slightly lower temperature, so as to prevent melting, which, however, results in a lesser growth in thickness (e.g. only 150%). In other film materials such as PET and PA, the melting point of which is higher than that of PVDC, however, heating by means of air is indeed a possibility. The supply of hot air to the piece of intestine can be performed in various manners. One could e.g. think of a ring extending around the piece of intestine which, at the inside facing the piece of intestine, is provided with holes from which the air is emitted.

In accordance with these views, an embodiment of the invention provides a method, according to which heating of the piece of intestine is performed by irrigation with a hot liquid. This irrigation is preferably performed from above. The piece of intestine can be irrigated by means of a curtain of liquid or a series of jets or by means of two curtains of liquid or series of jets located at opposite sides of the main axis of the piece of intestine. In another embodiment of the invention, heating is performed by blowing hot air onto the circumference of the piece of intestine. This hot air can be blown onto the piece of intestine from inwardly directed flow openings of a cylindrical nozzle surrounding the piece of intestine.

The method according to the invention will now be further elucidated on the basis of an example.

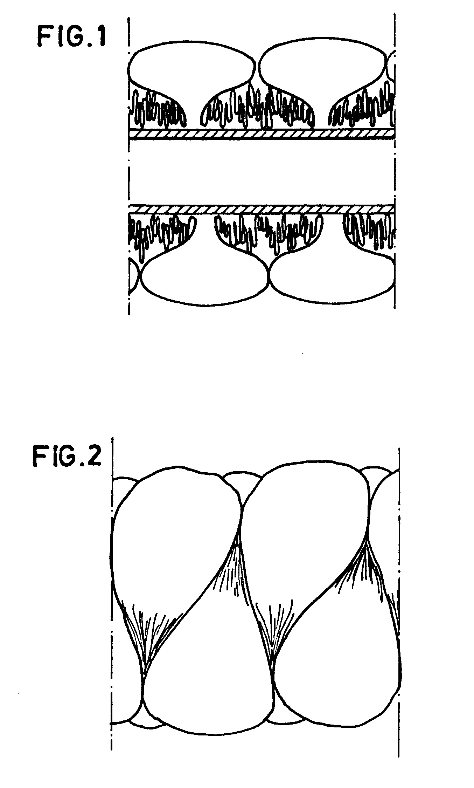

A flat tube of plastic film with a flat width of 90 mm was led onto a shirring mandrel having a diameter of 41 mm at a speed of about 100 m/min and simultaneously blown up to a cylindrical shape by means of air supplied through the shirring mandrel into the tube. The air pressure within the tube was maintained at 0.1 Mpa. The shirring mandrel was moved in the direction of processing at a speed far below the running-in speed, viz. about 6 m/min. Once applied onto the mandrel, the tube was shoved by means of shirring wheel action (with a peripheral velocity of about 125 m/min) in the direction of a tube stop mounted at the other end of the mandrel. Due to the presence of the stop, the supply of length of tube and the shirring wheel action, the tube was shoved together. As a consequence of the high internal pressure and the space available in the direction of processing, the material was locally prevented from pleating. As a result, interruptions were generated in the, otherwise rectilinearly pleated, material with widths of 5 - 10 mm, from which - as a result of the air pressure - high-pressure balloon-shaped bulges sprung, divided over the exterior of the piece of intestine (vide figure 1 and figure 2).

In one embodiment of the invention, the diameter of the mandrel was set at 28 mm., which resulted, on account of the great clearance in the radial direction of the tube, in an increase of the surface of the balloon-shaped bulges compared to the above-discussed embodiment.

The tube was cut behind the shirring wheels after about 20 m. of tube had been shirred, thus obtaining a piece of intestine. The thus obtained pieces of intestine were subsequently exposed to heating in a condition poor of stress with the material at the location of the bulges without pleating stresses. In one embodiment thereof, a piece of PVDC intestine was irrigated with paraffin oil at a temperature of 140 - 145°C from above by means of a curtain of liquid that was applied transversely to the main axis of the piece of intestine. This irrigation was performed in excess: about 250 ml per 20 m. tube length. As a result of this heat treatment, the bulges and also part of the remaining material shrunk, forming smooth transitions between the shrunk and non-shrunk material. On account of their quite irregular appearance, the synthetic intestines, obtained from the piece of intestine thus treated, bore a great resemblance to some types of natural intestines.

In one embodiment, the piece of intestine was irrigated by means a series of jets, the originating points of which were in a straight line transversely to the main axis, instead of by means of a curtain of liquid.

In these embodiments of the invention, the production of so-called straight intestines was always the starting point. The same processing techniques can, in principle, be applied to the production of so-called wreathed intestines.

**Claims**

1. Process for the manufacture of a piece of intestine of shrinkable plastic film suited to be filled with foodstuffs, in which the plastic film, having a tubular shape, is lead onto a mandrel at a certain running-in speed, while being kept at an internal pressure higher than the ambient pressure by means of air supplied, so that it assumes a cylindrical shape, and is shirred onto said mandrel, in which, during shirring, the plastic tube is more or less pleated with the aid of the shirring wheels and in which the shirred part of the plastic tube is subjected to a heat treatment at a heating station wherein its exterior surface is locally heated to a temperature at which the plastic material starts to shrink, which temperature is below the melting temperature or the plastic material, characterized in that, after a certain length of tube has been shirred onto the mandrel, the plastic tube is cut off downstream of the shirring wheels and at or upstream of the heating station so that the thus obtained separated piece of intestine is maintained in a condition in which it is free of stress, other than those which are the result of gravitational forces or it being shirred, in which condition the piece of intestine is subjected to the heat treatment.

2. Process according to claim 1, characterized in that the internal pressure at which the plastic tube is maintained is 0.05-0.25 MPa higher than the ambient pressure and the ratio between the running-in speed of the tube and the mandrel speed, with which the mandrel is moved in the direction of processing, is chosen so that the ratio between the lengths of the tube forming the piece of intestine and the piece of intestine itself will amount to less than 30:1, so that the shirred plastic tube acquires unpleated bulges which are divided over its exterior at random.

3. Process according to claim 2, characterized in that the running-in speed and the mandrel speed are chosen so that the ratio of lengths will amount to 20:1.

4. Process according to claims 2 and 3 characterized in that the plastic material is PVDC (Polyvinylidenchlorid) and in that the internal pressure is maintained 0.05 - 0.20 MPa higher than the ambient pressure.

5. Process according to claim 4, characterized in that the internal pressure is maintained 0.10 MPa higher than the ambient pressure.

6. Process according to claims 2 and 3, characterized in that the plastic material is PET (polyethylene terephthalate) or PA (Polyamid) and in that the internal pressure is maintained 0.07 - 0.25 MPa higher than the ambient pressure.

7. Process according to one of the preceding claims, characterized in that the mandrel diameter is chosen at 50 to 60% of the diameter of the plastic tube, so that the irregularities at the external surface of the shirred plastic tube perceptibly increase in number and/or size.

8. Process according to one of the preceding claims, characterized in that, after the certain length of tube has been shirred onto the mandrel the internal over-pressure in the shirred tube is removed and in that subsequently, when the shirred tube is cut off, an internal over-pressure is etablished within the shirred tube, which is of a level that is higher than the level of the first-mentioned internal over-pressure and 0.10 - 0.20 MPa higher than the ambient pressure.

9. Process according to claim 8, characterized in that when cutting the tube, the internal pressure is maintained 0.15 MPa higher than the ambient pressure.

10. Process according to one of the preceding claims, characterized in that the heating of the piece of intestine is performed by means of irrigation with a hot liquid.

11. Process according to claim 10, characterized in that said irrigation is performed from above.

12. Process according to claim 11, characterized in that said irrigation is performed by means of a curtain of liquid or a series of jets.

13. Process according to claim 12, characterized in that said irrigation is performed by means of two curtains of liquid or series of jets located at opposite sides of the main axis of the piece of intestine.

14. Process according to claims 1-9, characterized in that heating is performed by blowing hot air onto the circumference of the piece of intestine.

15. Process according to claim 14, characterized in that the hot air is blown onto the piece of intestine from inwardly directed flow openings of a cylindrical nozzle surrounding the piece of intestine.

## Revendications

1. Procédé de fabrication d'un morceau de boyau en film plastique rétrécissable adapté à être rempli d'aliments, dans lequel le film plastique, ayant une form tubulaire, est conduit sur un mandrin à une certaine vitesse d'entrée, pendant qu'il est conservé à une pression interne plus élevée que la pression ambiante au moyen d'air fourni, de telle façon qu'il prenne une forme cylindrique, et est froncé sur ledit mandrin, dans lequel, durant le froncement, le tube plastique est plus ou moins plissé à l'aide de roues de froncement et dans lequel la partie froncée du tube plastique est soumise à un traitement thermique à un poste de chauffage dans lequel sa surface extérieure est localement chauffée à une température à laquelle le matériau plastique commence à rétrécir, laquelle température est en-dessous de la température de fusion du matériau plastique, **caractérisé en ce que** après qu'une certaine longueur de tube ait été froncée sur le mandrin, le tube plastique est coupé en aval des roues de froncement et à l'endroit ou en amont du poste de chauffage de telle manière que le morceau de boyau séparé ainsi obtenu soit maintenu dans un état dans lequel il est libre de contrainte, hormis celles qui sont le résultat des forces gravitationnelles ou l'ayant froncé, état dans lequel le morceau de boyau est soumis au traitement thermique.

2. Procédé selon la revendication 1, **caractérisé en ce que** la pression interne à laquelle le tube plastique est maintenu est de 0,05 à 0,25 MPa plus élevée que la pression ambiante et en ce que le rapport entre la vitesse d'entrée du tube et la vitesse de mandrin, avec laquelle le mandrin est déplacé dans la direction de fabrication, est choisi de façon à ce que le rapport entre les longueurs du tube formant le morceau de boyau et le morceau de boyau lui-même s'élève à moins de 30:1, de telle sorte que le tube plastique froncé acquière des renflements non plissés qui sont répartis au hasard sur son extérieur.

3. Procédé selon la revendication 2, **caractérisé en ce que** la vitesse de déplacement et la vitesse de mandrin sont choisies de telle façon que le rapport des longeurs s'élève à 20:1.

4. Procédé selon les revendications 2 et 3, **caractérisé en ce que** le matériau plastique est du chlorure de polyvinylidène et en ce que la pression interne est maintenue à un niveau de 0,05 à 0,20 MPa plus élevé que la pression ambiante.

5. Procédé selon la revendication 4, **caractérisé en ce que** la pression interne est maintenue à un niveau de 0,10 MPa supérieur à la pression ambiante.

6. Procédé selon les revendications 2 et 3, **caractérisé en ce que** le matériau plastique est du polyéthylène terephthalate ou du polyamide et en ce que la pression interne est maintenue à un niveau de 0,07 à 0,25 MPa supérieur à la pression ambiante.

7. Procédé selon l'une quelconque des revendications précédentes, **caractérisé en ce que** le diamètre du mandrin représente de 50 à 60% du diamètre du tube plastique, de manière telle que les irrégularités à la surface externe du tube plastique froncé augmentent de façon perceptible en nombre et/ou en taille.

8. Procédé selon l'une quelconque des revendications précédentes, **caractérisé en ce que**, après que la certaine longueur de tube ait été froncée sur le mandrin, la surpression interne dans le tube froncé est supprimée et en ce qu'ultérieurement, quand le tube froncé est coupé, une surpression interne est établie à l'intérieur du tube froncé, qui est d'un niveau plus élevé que le niveau de la première surpression interne mentionnée, et de 0,10 à 0,20 MPa plus élevé que la pression ambiante.

9. Procédé selon la revendication 8, **caractérisé en ce que**, quand le tube est coupé, la pression interne est maintenue à un niveau de 0,15 MPa supérieur à la pression ambiante.

10. Procédé selon l'une quelconque des revendications précédentes, **caractérisé en ce que** le chauffage du morceau de boyau est accompli au moyen d'un arrosage par un liquide chaud.

11. Procédé selon la revendication 10, **caractérisé en ce que** ledit arrosage est accompli à partir du dessus.

12. Procédé selon la revendication 11, **caractérisé en ce que** ledit arrosage est accompli au moyen d'un rideau de liquide ou d'une série de jets.

13. Procédé selon la revendication 12, **caractérisé en ce que** ledit arrosage est accompli au moyen de deux rideaux de liquide ou de séries de jets situés à des côtés opposés de l'axe principal du morceau de boyau.

14. Procédé selon les revendications 1 à 9, **caractérisé en ce que** le chauffage est accompli en soufflant de l'air chaud sur la circonférence du morceau de boyau.

15. Procédé selon la revendication 14, **caractérisé en ce que** l'air chaud est soufflé sur le morceau de boyau à partir d'ouvertures de passage, dirigées vers l'intérieur, d'un tuyau cylindrique entourant le morceau de boyau.

**Patentansprüche**

1. Verfahren zur Herstellung eines Stücks Darm aus einem schrumpfbaren Kunststoffilm, das zur Befüllung mit Nahrungsmitteln geeignet ist, wobei der Kunststoffilm, der eine röhrenförmige Gestalt aufweist, auf einen Dorn bei einer bestimmten Zulaufgeschwindigkeit geführt wird, wobei er bei einem höher als der Umgebungsdruck liegenden Innendruk mittels zugeführter Luft gehalten wird, so dass er eine zylindrische Form annimmt, und auf dem genannten Dorn gekräuselt wird, wobei der Kunststoffschlauch während des Kräuselns mit Hilfe der Kräuselräder mehr oder weniger gefaltet und der gekräuselte Teil des Kunststoffschlauchs einer Hitzebehandlung an einer Erhitzungsstation unterzogen wird, wobei seine Aussenoberfläche örtlich auf eine Temperatur erhitzt wird, bei der das Kunststoffmaterial zu schrumpfen beginnt, wobei die Temperatur unterhalb der Schmelztemperatur des Kunststoffmaterials liegt, **dadurch gekennzeichnet**, dass nachdem eine bestimmte Schlauchlänge an der Spindel aufgekräuselt worden ist, der Kunststoffschlauch abwärts der Kräuselräder und bei oder aufwärts der Erhitzungsstation abgeschnitten wird, so dass das so erhaltene abgetrennte Stück Darm in einem Zustand gehalten wird, in welchem es spannungsfrei ist, und zwar frei von anderen Spannungen als denjenigen, die das Ergebnis von Schwerkräften oder der Kräuselung sind, in welchem Zustand das Stück Darm der Hitzebehandlung unterzogen wird.

2. Verfahren gemäss Anspruch 1, **dadurch gekennzeichnet**, dass der Innendruck, bei dem der Kunststoffschlauch gehalten wird, um 0,05 bis 0,25 MPa höher als der Umgebungsdruck ist und das Verhältnis zwischen der Zulaufgeschwindigkeit des Schlauchs und der Dorngeschwindigkeit, mit der der Dorn in Verarbeitungsrichtung bewegt wird, so ausgewählt ist, dass das Verhältnis zwischen der Längen des das Stück Darm bildenden Schlauchs und dem Stück Darm selbst sich auf weniger als 30:1 beläuft, so dass der gekräuselte Kunststoffschlauch ungefältete Ausbuchtungen erwirbt, die beliebig über seine Aussenfläche verteilt sind.

3. Verfahren gemäss Anspruch 2, **dadurch gekennzeichnet**, dass die Zulaufgeschwindigkeit und die Dorngeschwindigkeit so ausgewählt sind, dass das Verhältnis der Längen sich auf 20:1 beläuft.

4. Verfahren gemäss Anspruch 2 oder 3, **dadurch gekennzeichnet**, dass das Kunststoffmaterial PVDC (Polyvinylidenchlorid) ist und dass der Innendruck um 0,05 bis 0,20 MPa höher als der Umgebungsdruck gehalten wird.

5. Verfahren gemäss Anspruch 4, **dadurch gekennzeichnet**, dass der Innendruck um 0,10 MPa höher als der Umgebungsdruck gehalten wird.

6. Verfahren gemäss Anspruch 2 und 3, **dadurch gekennzeichnet**, dass das Kunststoffmaterial PET (Polyethylenterephthalat) oder PA (Polyamid) ist und der Innendruck um 0,07 bis 0,25 MPa höher als der Umgebungsdruck gehalten wird.

7. Verfahren gemäss einem der vorhergehenden Ansprüche, **dadurch gekennzeichnet**, dass der Dorndurchmesser bei 50 bis 60% des Durchmessers des Kunststoffschlauchs gewählt wird, so dass die Unregelmässigkeiten an der Aussenoberfläche des gekräuselten Kunststoffschlauchs ersichtlich an Anzahl und/oder Grösse zunehmen.

8. Verfahren gemäss einem der vorhergehenden Ansprüche, **dadurch gekennzeichnet**, dass nachdem die bestimmte Länge an Schlauch auf dem Dorn gekräuselt worden ist, der innere Überdruck in dem gekräuselten Schlauch entfernt wird und dass anschliessend, wenn der gekräuselte Schlauch abgeschnitten ist, ein innerer Überdruck innerhalb des gekräusselten Schlauchs erzeugt wird, der auf einem Niveau liegt, das höher als das des erstgenannten inneren Überdrucks ist und um 0,10 bis 0,20 MPa höher als der Umgebungsdruck liegt.

9. Verfahren gemäss Anspruch 8, **dadurch gekennzeichnet**, dass der Innendruck, wenn der Schlauch zerschnitten wird, um 0,15 MPa höher als der Umgebungsdruck gehalten wird.

10. Verfahren gemäss einem der vorhergehenden Ansprüche, **dadurch gekennzeichnet**, dass die Erhitzung des Hautstücks mittels Berieselung mit einer heissen Flüssigkeit durchgeführt wird.

11. Verfahren gemäss Anspruch 10, **dadurch gekennzeichnet**, dass die genannte Berieselung von oben durchgeführt wird.

12. Verfahren gemäss Anspruch 11, **dadurch gekennzeichnet**, dass die genannte Berieselung mittels eines Flüssigkeitsvorhangs oder einer Reihe von Düsen durchgeführt wird.

13. Verfahren gemäss Anspruch 12, **dadurch gekennzeichnet**, dass die genannte Berieselung mittels zweier Flüssigkeitsvorhänge oder Reihen von Düsen durchgeführt wird, die an gegenüberliegenden Seiten der Hauptachse des Stücks Darm angeordnet sind.

14. Verfahren gemäss Anspruch 1 bis 9, **dadurch gekennzeichnet**, dass das Erhitzen durchgeführt wird, indem man Heissluft auf den Umfang des Stücks Darm bläst.

15. Verfahren gemäss Anspruch 14, **dadurch gekennzeichnet**, dass die Heissluft auf das Stück Darm aus nach innen gerichteten Durchflussöffnungen einer zylindrischen Düse geblasen wird, welche das Stück Darm umfasst.

FIG.1

FIG.2